# EUROPÄISCHE PATENTANMELDUNG

(11) **EP 2 120 312 A1**
(43) Veröffentlichungstag der Anmeldung: **18.11.2009**
(21) Anmeldenummer: 08156352.0
(22) Anmeldetag: 16.05.2008
(51) Int. Cl.: H02J 13/00

(54) **Verfahren zur Informationsübertragung**

(71) Anmelder: Giesen, Franz, 53332 Bornheim (DE); Höpfner, Gerd, 53332 Bornheim (DE)
(72) Erfinder: Giesen, Franz, 53332 Bornheim (DE); Höpfner, Gerd, 53332 Bornheim (DE)
(74) Vertreter: von Kreisler Selting Werner

(57) **Zusammenfassung**

Ein Verfahren zur Informationsübertragung über ein elektrisches Spannungsversorgungsnetz (4) mit mindestens einem Sender (1) und mindestens einem Empfänger, wobei das Spannungsversorgungsnetz (4) an das Netz angeschlossene Verbraucher mit einer Netzwechselspannung versorgt, beinhaltet die Schritte:
- Erzeugen einer Folge von mindestens einem Informationsimpuls durch Generieren einer Leistung mit dem Sender (1),
- Einspeisen der Impulsfolge in das Spannungsversorgungsnetz (4) zu einem Einspeisezeitpunkt,
- Empfangen der Impulsfolge mit dem Empfänger und
- Analysieren des Signalverlaufs (5) der empfangenen Impulse.

Um mit dem Verfahren eine große Informationsmenge mit kurzen Laufzeiten übertragen zu können und hierbei die Kosten gering zu halten, beinhaltet der Schritt "Analysieren des Signalverlaufs":
Ermitteln eines ersten Zeitpunktes (8), zu dem die Leistungseinspeisung durch den Sender (1) beendet oder der eingespeiste Leistungspegel variiert worden ist, in dem Signalverlauf (5) jedes Informationsimpulses, wobei eine zu übertragende Information eineindeutig der Differenz zwischen erstem Zeitpunkt (8) und dem Einspeisezeitpunkt (0) zugeordnet ist.

## Beschreibung

Die Erfindung betrifft ein Verfahren zur Informationsübertragung über ein elektrisches Spannungsversorgungsnetz.

Bekannt sind Informationsübertragungsverfahren, wie z. B. die Rundsteuertechnik, zur Übertragung von Informationen über ein elektrisches Spannungsversorgungsnetz mit mindestens einem Sender und mindestens einem Empfänger, wobei das Spannungsversorgungsnetz an das Netz angeschlossene Verbraucher mit einer Netzwechselspannung versorgt. Die Rundsteuertechnik dient zur Fernsteuerung von Verbrauchern durch Elektrizitätsversorgungsunternehmen, wobei die zu übertragenden Informationen Fernsteuerbefehle sind.

Die Übertragung der Steuerbefehle erfolgt durch Impulsfolgen in einem vorgegebenen Frequenzbereich von typischerweise 150 Hertz bis ca. 2000 Hertz. Die Impulsfolgen sind der Netzspannung mit einer Amplitude von ca. 1 - 4 % der jeweiligen Nennspannung überlagert. Die Datenübertragung kann beispielsweise zum Ein- und Ausschalten der Straßenbeleuchtung oder zum Zu- bzw. Abschalten von Lastregelobjekten dienen.

Die Informationsimpulse werden bei der Rundsteuertechnik als Tonfrequenzimpulse im Bereich von ca. 150 - 2000 Hertz in das Spannungsversorgungsnetz eingespeist. Das Spannungsversorgungsnetz kann ein Hochspannungsnetz im Bereich von 10 kV bis über 100 kV oder auch ein Niederspannungsnetz im Bereich von 0,4 kV sein. Die Tonfrequenz wird durch einen Ankopplungs-Schwingkreis festgelegt. Die Übertragung der Information erfolgt durch ein rhythmisches Ein- und Ausschalten der singulären Tonfrequenz, um ein Telegramm in Form einer Impulsfolge zu erzeugen. Die Impulsfolgen breiten sich flächendeckend über das gesamte Spannungsversorgungsnetz aus. Als zeitliche Referenz der rhythmischen Impulsfolge wird die Netzfrequenz von in der Regel 50 Hertz oder 60 Hertz verwendet, die für Sender und Empfänger eine gleiche Zeitbasis definiert.

Bei den herkömmlichen Informationsübertragungsverfahren der Rundsteuertechnik überprüft der Empfänger zu einer bestimmten Zeit, ob ein vorgegebener Schwellwert für den Tonfrequenzpegel überschritten oder unterschritten wird. Der Zeitpunkt, bei dem der Tonfrequenzpegel überschritten wird, ist der Beginn des empfangenen Impulses und der Zeitpunkt, zu dem der Schwellwert unterschritten wird, ist das Ende des empfangenen Impulses. Die Dauer des empfangenen Impulses hängt somit von dem verwendeten Schwellwert und von der Steigung des ansteigenden und des abfallenden Abschnitts des Signalverlaufes ab. Um die daraus resultierende Ungenauigkeit gering zu halten, müssen die gesendeten Informationsimpulse relativ lang sein und die Messung über einen langen Zeitraum erfolgen. Um die Laufzeit der Impulsfolgen gering zu halten, ist die Länge der Impulsfolge und somit die Menge der übertragbaren Informationen gering zu halten. Bei dem "Decabit"-Informationsübertragungsverfahren wird der Adressraum, also die übertragbare Informationsmenge, klein gehalten, um die Laufzeiten der Informationsimpulse zu verkürzen. Bei den Informationsübertragungsverfahren "Semagyr" und "Pulsadis" werden relativ große Adressräume verwendet, was relativ lange Informationsimpuls-Laufzeiten zur Folge hat.

Der Erfindung liegt die Aufgabe zugrunde, ein Informationsübertragungsverfahren für ein elektrisches Spannungsversorgungsnetz zu schaffen, mit dem eine große Informationsmenge mit kurzen Laufzeiten übertragen werden kann und hierbei die Kosten gering zu halten.

Das erfindungsgemäße Verfahren zur Informationsübertragung ist definiert durch die Merkmale von Patentanspruch 1.

Das erfindungsgemäße Verfahren ist **dadurch gekennzeichnet, dass** der Schritt "Analysieren des Signalverlaufs des empfangenen Impulses" beinhaltet:
Ermitteln eines ersten Zeitpunktes in dem Signalverlauf, zu dem die Leistungseinspeisung durch den Sender beendet oder die eingespeiste Leistung verändert worden ist.

Das heißt mit anderen Worten, dass bei dem Signalverlauf des empfangenen Informationsimpulses derjenige Zeitpunkt in dem Signalverlauf ermittelt wird, bei dem der Sender abgeschaltet worden ist oder bei dem die Sendeleistung verändert worden ist. Der erste Zeitpunkt ist also derjenige Zeitpunkt innerhalb des Signalverlaufs, bei dem eine messbare Änderung der Sendeleistung, entweder durch Ausschalten des Senders oder durch Verändern der Sendeleistung, erfolgt ist. Dieser erste Zeitpunkt innerhalb des Signalverlaufs lässt sich mit höherer Präzision ermitteln als durch die herkömmliche Schwellwertbildung. Der erste Zeitpunkt kann durch mathematische Verfahren, wie z. B. durch Annähern des Signalverlaufs durch ein Polynom n-ter Ordnung mit anschließender Bestimmung des Nulldurchgangs der Steigung des Polynoms ermittelt werden. Die Genauigkeit der Ermittlung des ersten Zeitpunktes ist größer als bei der herkömmlichen Verwendung des Schwellwerts. Dadurch können kürzere Informationsimpulse mit geringeren Laufzeiten oder mehr Informationsimpulse bei gleicher Laufzeit gesendet werden. Die übertragbare Informationsmenge ist erhöht und die Impulslaufzeit reduziert. Das Verfahren kann beispielsweise im Rahmen der Rundsteuertechnik bei herkömmlichen elektrischen Spannungsversorgungsnetzen angewendet werden und ist somit kostengünstig.

Zur Erhöhung der übertragbaren Informationsmenge können die Signalverläufe der vom Sender erzeugten Informationsimpulse gegenüber der Zeit verschoben werden, wobei jeder zu übertragenden Information eine bestimmte Zeitverschiebung eineindeutig zugeordnet ist. Beispielsweise können das Byte "0000" mit der Zeitverschiebung 0 ms, das Byte "0001" mit der Zeitverschiebung 50 ms, das Byte "0010" mit der Zeitverschiebung 100 ms und das Byte "0011" mit der Zeitverschiebung 150 ms gesendet werden.

Beim Analysieren des Signalverlaufs des empfangenen Informationsimpulses kann die Zeitverschiebung vom Empfänger durch Vergleich mit der Netzfrequenz des Spannungsversorgungsnetzes ermittelt werden. Die Netzfrequenz ist für Sender und Empfänger gleich und kann daher als Referenz-Zeitraster mit hoher Genauigkeit verwendet werden.

Zur Erhöhung der übertragbaren Informationsmenge können von dem Sender mehrere Informationsimpulse verschiedener Länge erzeugt werden, wobei jeder Impulslänge eineindeutig eine zu übertragende Information zugeordnet ist. Beispielsweise können die Impulslänge 150 ms dem Byte "0000" und die Impulslänge 300 ms dem Byte "0100" zugeordnet sein. Vorzugsweise wird die Impulslänge dadurch ermittelt, dass beim Analysieren des Signalsverlaufs des empfangenen Informationsimpulses ein zweiter Zeitpunkt bestimmt wird, zu dem der Signalverlauf einen Schwellwert übersteigt. Die Impulslänge ergibt sich dann aus der Differenz des ersten und des zweiten Zeitpunktes, wobei der erste Zeitpunkt den Ausschaltzeitpunkt des Senders in dem gemessenen Signalverlauf markiert und wobei der zweite Zeitpunkt den Einschaltzeitpunkt des Senders in dem gemessenen Signalverlauf repräsentiert.

Da die Bestimmung des zweiten Zeitpunktes unter Verwendung eines Schwellwertes Ungenauigkeiten unterliegt, die von der Wahl des Schwellwertes abhängen, sollten die Längenunterschiede der Informationsimpulse größer sein als die Abweichung des zweiten Zeitpunktes von dem Beginn des Impulsverlaufs.

Vorzugsweise wird als erster Informationsimpuls der zu übertragenden Impulsfolge ein Normierungsimpuls erzeugt, dessen Signalverlauf mindestens einen Referenzpegel enthält. Beim Empfangen einer Impulsfolge mit einem Normierungsimpuls kann der Empfänger nachfolgende Informationsimpulse mit dem Referenzpegel vergleichen. Ungenauigkeiten durch die Dämpfung der Signalpegel während der Übertragung sind dadurch vermieden.

Durch Verwendung eines Normierungsimpulses ist es möglich, die Pegelhöhe oder den Pegelverlauf eines Informationsimpulses einer zu übertragenden Information zuzuordnen, um so die Menge der übertragbaren Informationen zu erhöhen. So können beispielsweise Impulsen mit unterschiedlichen Pegelhöhen oder mit verschiedenen Pegelverläufen unterschiedliche Informationen eineindeutig zugeordnet werden. Beispielsweise kann der Normierungsimpuls einen ersten Referenzpegel von 1,5 % der Netzleistung und einen nachfolgenden zweiten Pegel von 1,1 % der Netzleistung enthalten. Bei nachfolgend empfangenen Informationsimpulsen kann der Empfänger durch einen Vergleich mit dem Normierungsimpuls feststellen, ob ein hoher Pegel, ein niedriger Pegel oder eine Kombination aus hohem und niedrigem Pegel vorliegt.

Insbesondere ist es dadurch möglich, Informationen im ASCII-Code in eine zu übertragende Impulsfolge zu kodieren. Hierbei kann jedem ASCII-Zeichen ein Informationsimpuls mit einer bestimmten Zeitverschiebung, einer bestimmten Länge und/oder einer bestimmten Kombination von Signalpegeln eineindeutig zugeordnet werden.

Um die Kompatibilität zwischen Sendern herkömmlicher Informationsübertragungsverfahren der Rundsteuertechnik und Empfängern, die nach dem erfindungsgemäßen Informationsübertragungs-Verfahren arbeiten, zu ermöglichen, kann beim Analysieren des empfangenen Informationsimpuls-Signalverlaufs eine Unterscheidung zwischen einer Impulsfolge nach einem herkömmlichen Informationsübertragungsverfahren und einer Impulsfolge nach dem erfindungsgemäßen Übertragungsverfahren durchgeführt werden, wobei ein Normierungsimpuls mit mehreren verschiedenen Signalpegeln als Informationsimpuls nach dem erfindungsgemäßen Übertragungsverfahren erkannt wird. Herkömmliche Informationsübertragungsverfahren der Rundsteuertechnik hingegen können nur Informationsimpulse eines Signalpegels übertragen.

Bei den herkömmlichen Informationsübertragungsverfahren konnten Informationsimpulse nur binär übertragen werden, d. h. ein empfangener Puls wurde als logische 1 und kein empfangener Puls als logische 0 dekodiert. Dadurch konnten Informationen nur durch Impulsfolgen vorgegebener Länge übertragen werden. Bei dem erfindungsgemäßen Informationsübertragungsverfahren hingegen können verschiedene Zeitverschiebungen, Impulslängen und/oder Impulspegel jeweils verschiedenen Informationen zugeordnet werden. Dadurch sind ausreichende Kodierungsmöglichkeiten für Informationen geschaffen, so dass ein nicht gesendeter Informationsimpuls als Ende einer Impulsfolge erkannt werden kann. Dadurch ist es möglich, Impulsfolgen unterschiedlicher Längen zu senden, wodurch die Laufzeit für die Informationsübertragung reduziert ist.

Die Verträglichkeit, d. h. gemeinsame Benutzbarkeit, zwischen Bitmustern herkömmlicher Übertragungsverfahren und dem erfindungsgemäßen Übertragungsverfahren kann dadurch hergestellt werden, dass der Normierungsimpuls neben der Pegelnormierung ebenso eine Zeitnormierung überträgt. Vorzugsweise erfolgt dies dadurch, dass das Impulsraster (die Blocklänge) in 5 ms oder 10 ms-Schritten gedehnt oder gestaucht wird. Hierzu wird die Zeit zwischen dem Punkt 1 ("Pegelwechsel von hohem Pegel zu niedrigem Pegel") und dem Punkt 2 ("Pegelwechsel zwischen dem niedrigen Pegel und dem Sendeausscheid") senderseitig in diesen diskreten Schritten variiert. Da beide Punkte erfindungsgemäß mit großer Genauigkeit festgestellt werden können, wird die Blocklänge seitens des Senders in diskreten Schritten verändert und seitens des Empfängers ermittelt. Die weiteren Impulse einer Übertragungssequenz werden dann senderseitig entsprechend bezüglich ihrer genauen Lage im Zeitverlauf des Telegramms bestimmt und empfängerseitig entsprechend erwartet.

Mit Hilfe der oben beschriebenen Technik können senderseitig die Gesamtlaufzeit und die Lage der einzelnen Impulse des erfindungsgemäßen Bitmustern unter Beibehaltung des Übertragungsinhaltes geeignet variiert werden. Ziel dieser Variation ist es, im Verlauf des erfindungsgemäßen Bitmusters die Impulse so zu platzieren, dass die Altempfänger ein illegales bzw. korruptes Bitmuster erkennen. Dies kann beispielsweise dadurch geschehen, dass ein oder mehrere Impulse in eine impulslose Zeit des Altbitmusters fallen. Alternativ kann dies dadurch geschehen, dass eventuell vorhandene Prüfsummen des Altbitmusters, z. B. bei Decabit, Versacom oder Semagyr-TOP, verletzt werden. Ein Impuls in einer per Definition des Altbitmusters impulsfreien Zeit (Pausenzeit) wird in der Regel als Fehler im Bitmuster erkannt und führt zum Abbruch der Dekodierung. Ein Vorteil der Laufzeitdehnung oder -stauchung ist, dass diese Variation der Übertragungsgeschwindigkeit vor jeder Sendung in Abhängigkeit vom Sendeinhalt erfolgen kann. Die Laufzeitdehnung oder Stauchung ist also keine statische Eigenschaft des erfindungsgemäßen Bitmusters sondern eine dynamische und damit flexible Eigenschaft.

Im Folgenden wird anhand der Figuren ein Ausführungsbeispiel der Erfindung näher erläutert.

### Es zeigen:

- Fig. 1: Die Ankopplung eines Senders an ein Spannungsversorgungsnetz,
- Fig. 2: den Signalverlauf eines Informationsimpulses und
- Fign. 3a - e: eine Pegelverlaufsdarstellung für eine 3-Byte-Übertragung nach dem erfindungsgemäßen Verfahren.

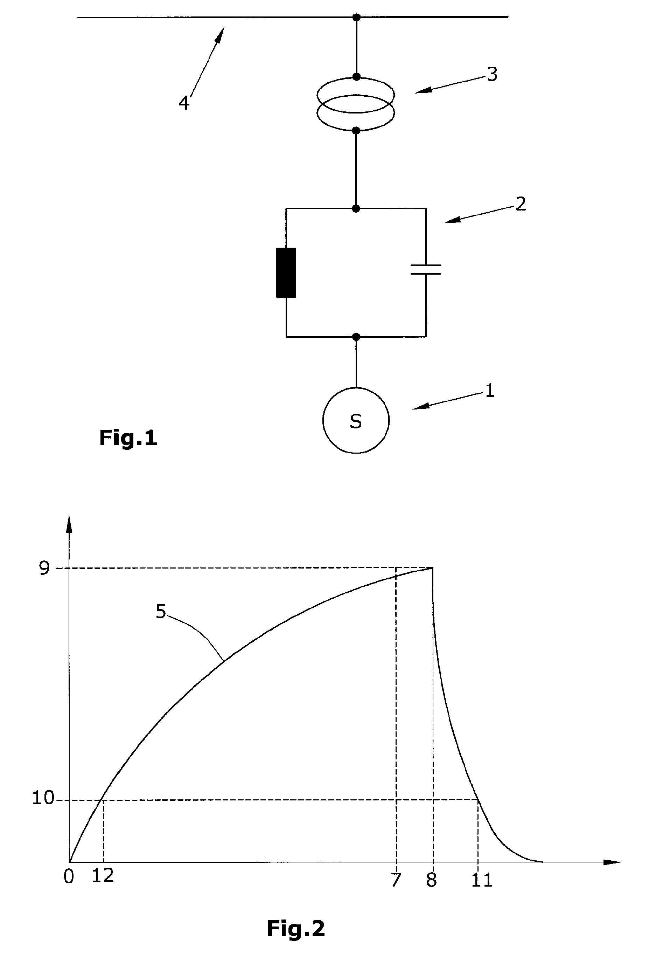

Figur 1 zeigt einen Sender 1 zur Erzeugung eines Informationsimpulses, der über einen Schwingkreis 2 zur Festlegung der Pulsfrequenz und über einen Koppeltransformator 3 an ein Hochspannungsversorgungsnetz angekoppelt ist. Durch kurzzeitiges Ein- und Ausschalten des Senders 1 kann ein Tonfrequenzimpuls erzeugt werden, dessen Frequenz durch den Schwingkreis 2 festgelegt wird. Über den Koppeltransformator 3 wird der Tonfrequenzimpuls in das Spannungsversorgungsnetz 4 eingespeist und an Empfänger, die mit dem Netz 4 verbunden sind, übertragen.

Figur 2 zeigt eine typische Darstellung des Signalverlaufs 5 eines Informationsimpulses über der Zeit. In Figur 2 ist die Zeit über der Abszisse und der Signalpegel über der Ordinate des Koordinatensystems aufgetragen. Die Kurve 5 stellt den Signalverlauf des empfangenen Informationsimpulses dar. Im Bereich zwischen den Punkten 0 und 7 steigt der Signalverlauf aufgrund des Einschwingverhaltens an und erreicht im Bereich zwischen den Punkten 7 und 8 den gewünschten Signalpegel 9. Der Zeitpunkt 0 ist derjenige Zeitpunkt innerhalb des Signalverlaufs, bei dem der Sender eingeschaltet worden ist, um den Impuls zu erzeugen. Der Zeitpunkt 8 ist derjenige Zeitpunkt innerhalb des Signalverlaufs, bei dem der Sender wieder ausgeschaltet worden ist. Nach dem Ausschaltzeitpunkt 8 fällt der Signalpegel dem Ausschwingverhalten gemäß wieder ab.

Bei den herkömmlichen Informationsübertragungsverfahren bei der Rundsteuertechnik wurde ein Schwellwert 10 festgelegt, z. B. 0,5 % der Netzspannung, und oberhalb des Schwellwertes 10 wurde der Informationsimpuls gemessen, so dass sich die gemessene Impulsdauer aus der Differenz der Schnittpunkte 11 und 12 des Grenzpegels 10 mit dem Signalverlauf 5 ergibt. Aus Figur 2 ist ersichtlich, dass die Bestimmung der Impulsdauer aus der Differenz der Punkte 11 und 12 nicht gleich der tatsächlichen Impulsdauer, nämlich der Differenz der Punkte 8 und 0, ist.

Bei dem erfindungsgemäßen Verfahren wird der Signalverlauf 5 mathematisch zunächst durch ein Polynom n-ter Ordnung angenähert. Von diesem Polynom wird anschließend die erste Ableitung, also der Steigungsverlauf, berechnet. Durch Bestimmung des Nulldurchgangs des Steigungsverlaufs kann der Zeitpunkt 8 bestimmt werden zu dem der Sender 1 ausgeschaltet wurde, wobei die Genauigkeit einer solchen Bestimmung des Zeitpunktes 8 höher ist als die Bestimmung der Differenz der Punkte 11 und 12 unter Verwendung des Schwellwertes 10. Der Zeitpunkt 8 ist der erste Zeitpunkt in dem Signalverlauf zu dem die Leistungseinspeisung durch den Sender beendet worden ist.

Zur Bestimmung der Impulslänge kann unter Verwendung des Schwellwerts 10 der Zeitpunkt 12 als Einschaltzeitpunkt bestimmt werden. Der Zeitpunkt 12 ist der zweite Zeitpunkt in dem Signalverlauf, zu dem der Signalverlauf 5 den Schwellwert 10 übersteigt. Die Impulslänge ergibt sich dann aus der Differenz der Punkte 8, der den Ausschaltzeitpunkt repräsentiert, und des zweiten Zeitpunktes 12, der den Einschaltzeitpunkt repräsentiert.

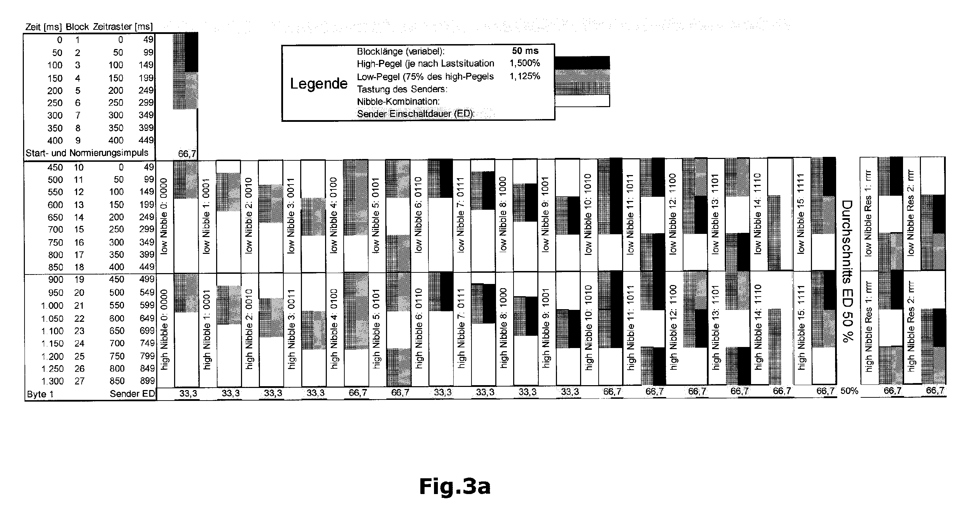

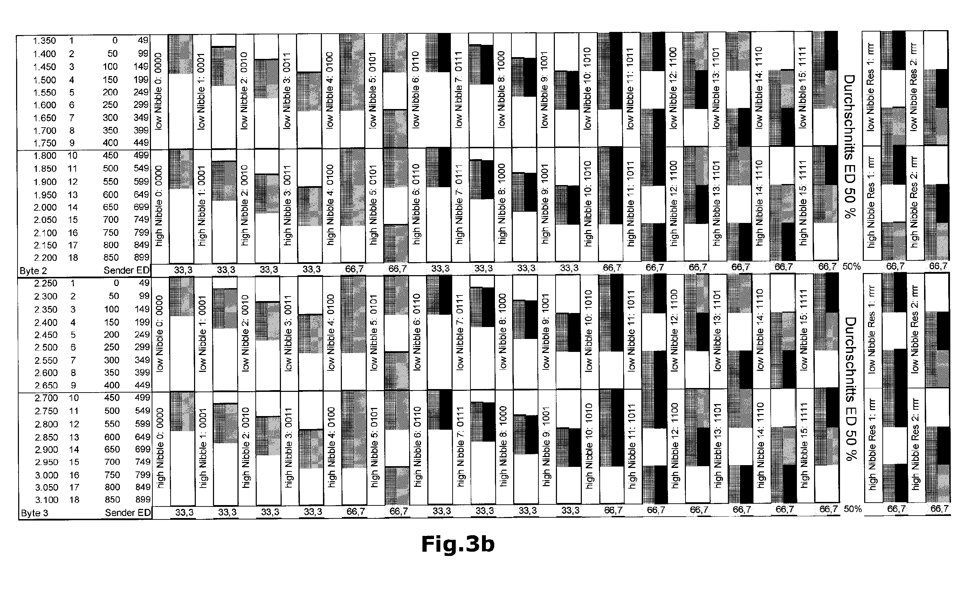

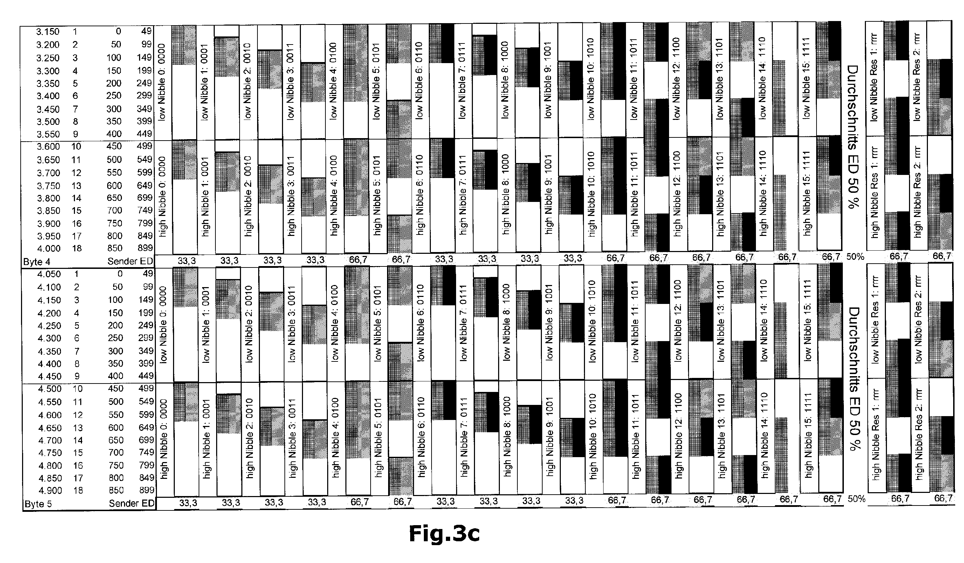

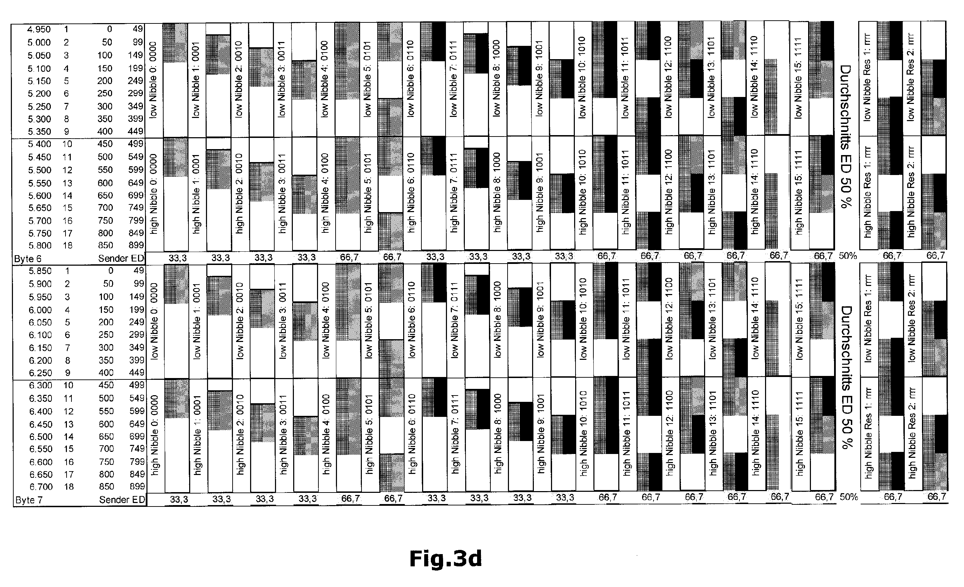

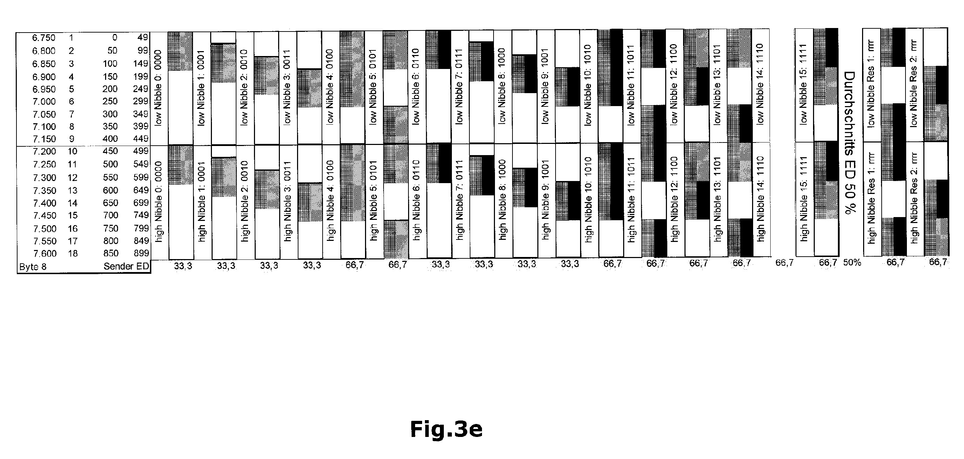

Die Figuren 3a - e zeigen in tabellarischer Form eine Pegelverlaufsdarstellung für eine 8-Byte-Übertragung nach dem erfindungsgemäßen Informationsübertragungsverfahren. Aus den Figuren 3a - e sind die verschiedenen Informationskodiermöglichkeiten ersichtlich. In der Zeit von 0 - 300 ms wird ein Normierungsimpuls mit 66,7 % der maximalen Sender-Einschaltdauer gesendet. Der Normierungsimpuls hat von 0 - 150 ms einen hohen Signalpegel, nämlich 1,5 % der Netzspannung, und von 150 - 300 ms einen niedrigen Signalpegel, nämlich 1,1 % der Netzspannung. Diese beiden Signalpegel dienen als Referenzpegel für die nachfolgenden Informationsimpulse.

In der Zeit zwischen 450 ms und 1350 ms, das sind die Blöcke 10 - 27, wird das erste Byte übertragen. Die Übertragung eines Bytes beansprucht 18 Blöcke mit einer Länge von je 50 ms. Die Länge eines Bytes beträgt also 900 ms. Dabei wird die Übertragung eines Bytes in zwei Nibbel von je 4 Bit unterteilt. Die Codierung beider Nibbel ist gleich. Ein Nibbel beansprucht 9 Blöcke.

Das "Low Nibble 0" der ersten Nibbel-Kombination "0000" wird als Informationsimpuls von 450 - 600 ms mit dem niedrigen Signalpegel von 1,1 % der Netzspannung und bei einer Sender-Einschaltdauer von 33,3 % übertragen. Das "High Nibbel 0" der ersten Nibbel-Kombination "0000" wird als Informationsimpuls von 900 - 1050 ms mit dem niedrigen Signalpegel von 1,1 % der Netzspannung und bei einer Sender-Einschaltdauer von 33,3 % übertragen.

Die zweite Nibbel-Kombination "0001" entspricht der ersten und ist gegenüber dieser um 50 ms verschoben. Die dritte Nibbel-Kombination "0010" und die vierte Nibbelkomination "0011" entsprechen ebenfalls jeweils der ersten und sind jeweils um weitere 50 ms verschoben. Die beiden Nibbel der fünften Nibbel-Kombination "0100" sind jeweils Informationsimpulse von 300 ms Länge, also der doppelten Länge gegenüber den Informationsimpulsen der ersten Nibbel-Kombination. Die sechste Nibbel-Kombination "0101" besteht aus zwei nachfolgenden Informationsimpulsen, die jeweils den Informationsimpulsen der ersten Nibbel-Kombination entsprechen und in einem Abstand von 150 ms gesendet werden. Die siebte Nibbel-Kombination "0110" entspricht der ersten Nibbel-Kombination bis auf die Pegelhöhe, die bei der siebten Nibbel-Kombination der höhere Signalpegel von 1,5 % der Netzspannung ist.

Die Figuren 3a - e zeigen jeweils 16 Kombinationsmöglichkeiten, bestehend aus den Variationsmöglichkeiten bezüglich Impulslänge, Impulsposition und Impulspegel. Diesen dort vorgeschlagenen 16 Kombinationsmöglichkeiten werden die genau 16 Kombinationsmöglichkeiten eines Nibbles (0000, 0001, 0010, ..., 1110, 1111) zugeordnet. Die beiden Nibbles (je 9 Blöcke) eines Impulsplatzes, der aus 18 Blöcken besteht, bilden jeweils ein Byte, z. B. gemäß ASCII-Codierung. Die Codierung aller folgenden Bytes ist identisch. Byte 2 wird dann von der Zeit 1350 ms bis zur Zeit 2250 ms übertragen. Byte 3 wird von der Zeit 2250 ms bis zur Zeit 3150 ms übertragen. Die genannten Zeiten können durch eine mögliche Dehnung oder Stauchung des Bitmusters variieren, um dadurch die Kompatibilität zwischen zwei im Netz verwendeten Bitmustern zu gewährleisten.

## Patentansprüche

1. Verfahren zur Informationsübertragung über ein elektrisches Spannungsversorgungsnetz (4) mit mindestens einem Sender (1) und mindestens einem Empfänger, wobei das Spannungsversorgungsnetz (4) an das Netz angeschlossene Verbraucher mit einer Netzwechselspannung versorgt, mit den Schritten:
- Erzeugen einer Folge von mindestens einem Informationsimpuls durch Generieren einer Leistung mit dem Sender (1),
- Einspeisen der Impulsfolge in das Spannungsversorgungsnetz (4) zu einem Einspeisezeitpunkt (0),
- Empfangen der Impulsfolge mit dem Empfänger,
- Analysieren des Signalverlaufs (5) der empfangenen Impulse,
**dadurch gekennzeichnet,**
**dass d**er Schritt "Analysieren des Signalverlaufs" beinhaltet:
- Ermitteln eines ersten Zeitpunktes (8), zu dem die Leistungseinspeisung durch den Sender (1) beendet oder der eingespeiste Leistungspegel variiert worden ist, in dem Signalverlauf (5) jedes Informationsimpulses, wobei eine zu übertragende Information eineindeutig der Differenz zwischen erstem Zeitpunkt (8) und dem Einspeisezeitpunkt (0) zugeordnet ist.

2. Verfahren nach Anspruch 1, **dadurch gekennzeichnet, dass** der Schritt "Ermitteln eines ersten Zeitpunktes" beinhaltet:
- Repräsentieren des Signalsverlaufs (5) jedes Informationsimpulses durch ein Polynom,
- Bestimmen des Steigungsverlaufs des Polynoms und
- Bestimmen des Nulldurchgangs des Steigungsverlaufs.

3. Verfahren nach Anspruch 1 oder 2, **dadurch gekennzeichnet, dass** der Schritt "Erzeugen einer Folge von mindestens einem Informationsimpuls" beinhaltet:
- Zeitliches Verschieben des Signalverlaufes (5) mindestens eines der Informationsimpulse, wobei zu übertragende Informationen eineindeutig der Zeitverschiebung zugeordnet sind.

4. Verfahren nach Anspruch 3, **dadurch gekennzeichnet, dass** der Schritt "Analysieren des Signalverlaufs" beinhaltet:
- Ermitteln der Zeitverschiebung des Signalsverlaufs (5) durch Vergleich mit der Frequenz der Netzwechselspannung.

5. Verfahren nach einem der Ansprüche 1 - 4, **dadurch gekennzeichnet, dass** der Schritt "Erzeugen einer Folge von mindestens einem Informationsimpuls" beinhaltet:
- Erzeugen einer Mehrzahl von Informationsimpulsen verschiedener Länge, wobei zu übertragende Informationen eineindeutig jeweils einer Impulslänge zugeordnet sind.

6. Verfahren nach Anspruch 5, **dadurch gekennzeichnet, dass** der Schritt "Analysieren des Signalverlaufs" beinhaltet:
- Bestimmen eines zweiten Zeitpunktes (12), bei dem der Signalverlauf (5) einen vorgegebenen Schwellwert (10) übersteigt und
- Berechnen der Impulslänge aus dem zeitlichen Abstand zwischen dem ersten und dem zweiten Zeitpunkt (8, 12).

7. Verfahren nach Anspruch 6, **dadurch gekennzeichnet, dass** die Längenunterschiede der Informationsimpulse größer sind als die Abweichung des zweiten Zeitpunktes (12) vom Beginn (0) des jeweiligen Signalverlaufs (5).

8. Verfahren nach einem der Ansprüche 1 - 7, **dadurch gekennzeichnet, dass** die Folge von mindestens einem Informationsimpuls derart erzeugt wird, dass ein Informationsimpuls ein Normierungsimpuls ist, dessen Signalverlauf (5) mindestens einen vorgegebenen Referenzpegel enthält.

9. Verfahren nach Anspruch 8, **dadurch gekennzeichnet, dass** die Informationsimpulse der Impulsfolge derart erzeugt werden, dass die betreffenden Signalverläufe (5) jeweils einen oder mehrere der Referenzpegel enthalten, wobei zu übertragende Informationen eineindeutig bestimmten Referenzpegeln und/oder Referenzpegelkombinationen zugeordnet sind.

10. Verfahren nach einem der Ansprüche 1 - 9, **dadurch gekennzeichnet, dass** die Impulsfolge Informationen im ASCII-Code kodiert.

11. Verfahren nach einem der Ansprüche 1 - 10, **dadurch gekennzeichnet, dass** der Schritt "Analysieren des Signalverlaufs" beinhaltet:
- Unterscheiden, ob eine konventionelle Impulsfolge oder eine erfindungsgemäße Impulsfolge vorliegt, durch Analysieren des Signalverlaufs (5), wobei die Signalverläufe der erfindungsgemäßen Impulsfolge verschiedene Signalpegel enthalten.

12. Verfahren nach einem der Ansprüche 1 - 11, **dadurch gekennzeichnet, dass** der Schritt "Erzeugen einer Folge von mindestens einem Informationsimpuls" beinhaltet:
- Erzeugen eines Normierungspulses einer derartigen gedehnten oder gestauchten Länge, dass ein Empfänger für herkömmliche Impulsfolgen die Impulsfolge als fehlerhaft erkennt und nicht dekodiert.
